# Europäisches Patentamt

## European Patent Office

## Office européen des brevets

(19)

(11) Publication number: **0 248 805**
**B1**

---

(12)

# EUROPEAN PATENT SPECIFICATION

(45) Date of publication of the patent specification:
**27.12.89**

(51) Int. Cl.⁴: **G 06 F 13/14, H 04 L 11/16**

(21) Application number: **86901550.3**

(22) Date of filling: **11.02.86**

(86) International application number:
**PCT/SE 86/00055**

(87) International publication number:
**WO 86/04701 (14.08.86 Gazette 86/18)**

---

(54) **METHOD AND MEANS AT A SYSTEM FOR TRANSMISSION OF INFORMATION.**

---

(30) Priority: **11.02.85 SE 8500600**

(43) Date of publication of application:
**16.12.87 Bulletin 87/51**

(45) Publication of the grant of the patent:
**27.12.89 Bulletin 89/52**

(84) Designated Contracting States:
**AT BE CH DE FR GB IT LI LU NL**

(56) References cited:
**GB-A-1 468 966**

(73) Proprietor: **LINKÖPINGS SILICON CONSTRUCTION AB, Box 10016, S-580 10 Linköping (SE)**

(72) Inventor: **SVENSSON, Christer, Anders väg 33, S-590 60 Ljungsbro (SE)**

(74) Representative: **Willquist, Bo Lorentz, PATS. Willquist Patents S:t Larsgatan 29, S-582 24 Linköping (SE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

## Description

The present invention relates to a method for the transfer of information, such as control command signals and measuring data, etc., between a central processing unit and peripheral units, whereby the information is transferred in the form of a binary coded word with an address component and an information component via a number of communication circuits connected in a loop to the central processing unit, said circuits being so activated as to perform the transfer of the information component between the central processing unit and a peripheral unit selected on the basis of the address component. The invention also relates to an arrangement for executing said method.

In such systems of previously disclosed types each communication circuit has a unique address for activating same, which means that each communication circuit must be programmed in such a way that it is activated only by its own address. The fact that the communication circuits require to be programmable means that they are of complex design and are consequently comparatively expensive to manufacture. Good reasons have thus existed until now for such communication circuits to be used only in relatively complex applications, such as for the connection of computer terminals to a central computer.

The object of the present invention is to make available a method for a system for the transfer of information of the kind described by way of introduction, whereby the degree of simplification achieved is such that the system can be used economically for the connection of individual distributed components such as push-buttons, circuit-breakers, and warning lamps, etc., to a central processing unit, for example a microcomputer. This is made possible in accordance with the invention by the fact that the address component by means of which the communication circuits are activated is identical for all the communication circuits, that said address component, provided it does not have the value at which activation takes place, will be transmitted onwards between the communication circuits in the chain and in so doing will be modified in such a way that, once the binary coded word has arrived at the communication circuit belonging to the selected peripheral unit or at the central processing unit, the address component will have the value at which activation takes place, and that the address component will, on transmission of the binary coded word, be given a value such that, after said modification has taken place, the address component will exhibit said value at which activation takes place.

An arrangement which operates by the method to which the invention relates is characterized in that all the communication circuits are identical and are so arranged on the one hand as to be activated by an address which is identical for all the communication circuits, and on the other hand as to modify an address which has been adapted by the central processing unit so as to relate to the selected peripheral unit with regard to its position in the loop in such a way that the address, once it has passed along the communication circuits which belong to the units situated in the chain ahead of the selected peripheral unit, will have been modified to the aforementioned address for which the communication circuits have been activated.

In place of the familiar and customary method of connecting each peripheral unit to the central processing unit by means of its own cables, it is possible through the invention to achieve equivalent connection via the communication circuits, which are linked together in a chain with a small number of cables.

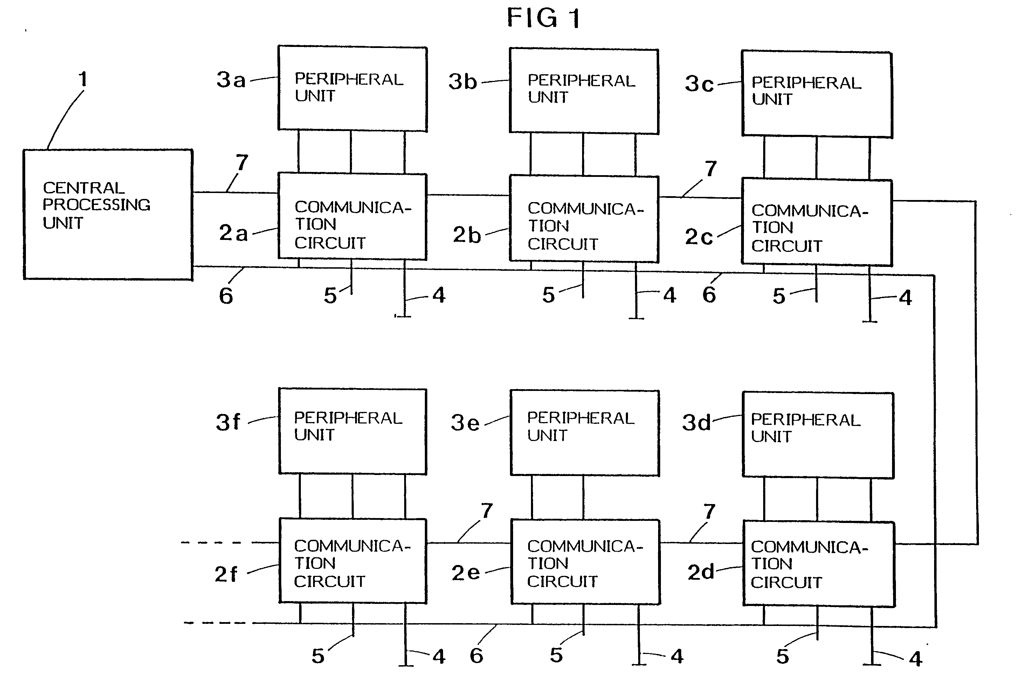

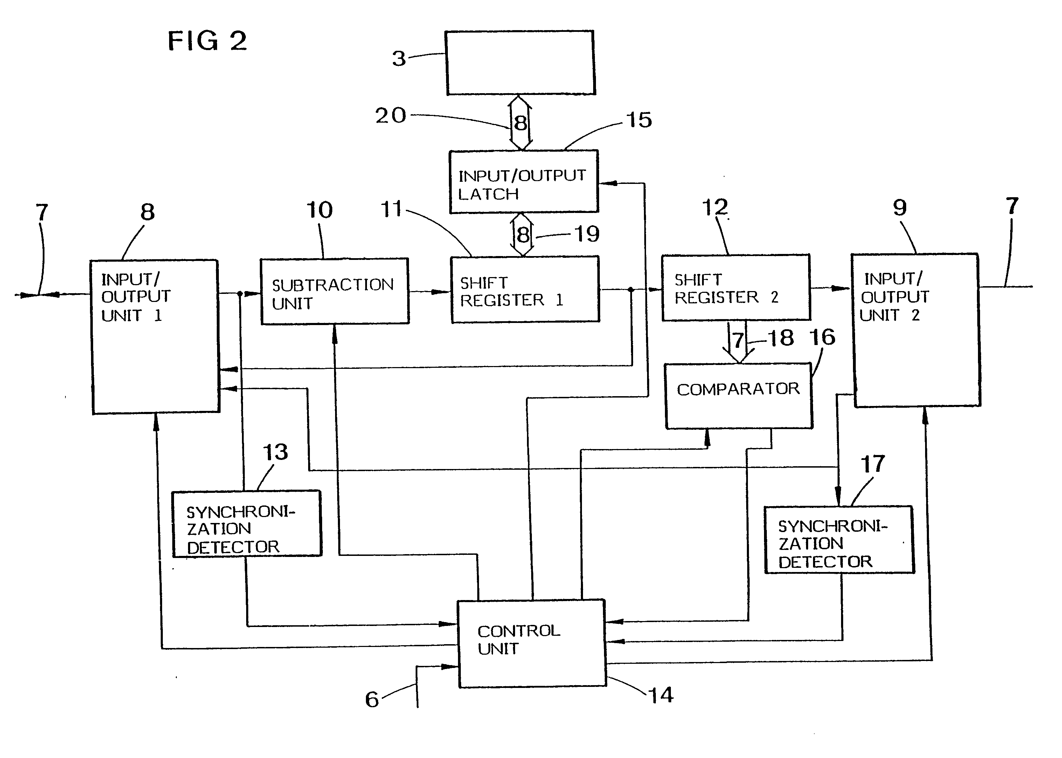

The invention is described below in greater detail with reference to the accompanying drawing, in which Fig. 1 shows in the form of a block diagram an information transfer system in accordance with the invention, and Fig. 2 shows, also in the form of a block diagram, an example of the layout of a communication circuit. The information transfer system in accordance with Fig. 1 comprises a central unit 1 and a number of communication circuits 2a, 2b, 2c ... 2f ... connected in a loop and a peripheral unit 3a, 3b, 3c ... 3f connected to each communication unit 2. The system illustrated in Fig. 1 operates in a synchronous fashion with fully serial communication between the communication units 2a, 2b ... 2f and with parallel communication between the respective communication circuits 2a, 2b ... 2f ... and an associated peripheral unit 3a, 3b ... 3f ... which is served by the communication unit. It has also been assumed that each communication circuit 2a ... 2f ... has been programmed either to transmit or to receive information, and that the central unit 1 performs an overall control function. In a system of this kind the communication circuits 2a ... 2f ... require to be connected by means of four lines, these being an earth line 4, a supply voltage line 5, a clock signal line 6, and a line 7 carrying an information signal. The clock signal is a square-topped wave which is distributed from the central processor unit 1 and which is used for synchronization purposes. The line 7 is a single-bit bus line and is used for the transfer of the address component and the information component in serial form. The communication circuits 2a ... 2f ... are shown in Fig. 1 to be connected in parallel as far as the earth line 4, the supply voltage line 5 and the clock signal line 6 are concerned, whereas the line 7 which carries information connects the communication circuits 2a ... 2f ... together in the form of a chain.

It is obvious that the transfer of information between the central processor unit 1 and the communication circuits 2a ... 2f ... , not to mention the transfer between themselves, can take place via a single- or a multiple-bit bus line, and that it can take place in a serial fashion as described above or in parallel. The transfer can also take place in a synchronous or in an asynchronous fashion.

The information transfer system described above with reference to Fig. 1 operates in the following manner: let us assume that the central processor unit 1 wishes to transfer the hexadecimal 8-bit number 1A as an information component to the peripheral unit 3f, which is the seventh in the chain. The central processor unit 1 will then transmit the address component and the information component along the signal line 7 in accordance with the following procedure. A binary one will be transmitted first in order to activate the first communication circuit 2a in the chain, whereupon eight bits with the number six in binary form are transmitted as the address component, and finally eight bits with the hexadecimal number 1A are transmitted as the information component. The communication circuit 2a examines the address component, establishes that it is not zero, subtracts the number one from the address component and transmits the binary coded word, which now has a new address component, onwards to communication circuit 2b, where the address component is examined in the same way as in 2a, and the number one is subtracted, and so on. Once the binary word has finally arrived as far as communication circuit 2f, this will establish that the address component is identical with zero, as a result of which the information component will be accepted and will be transferred to the peripheral unit 3f.

As another example, let us assume that the central processor unit 1 wishes to collect information from the peripheral unit 3e, which is fifth in the chain. It is presumed in this case that the associated communication circuit 2e has been programmed to transmit information in the form of binary coded words. The central processor unit 1 transmits a binary word in the same way as above, the address component of which is five; the contents of the information component have no significance. Once the binary word reaches the communication circuit 2e, the latter will react, since it has been programmed as a transmitter, in such a way that it will accept the information component arriving from the peripheral unit 3e and will transmit it to the central processor unit 1 preceded by a binary one. As soon as the communication circuit 2d senses the presence of the binary one on the line 7 which is normally the signal line output for the circuit, the incoming binary coded word will simply be transmitted onwards in the direction of the central processor unit 1, where it will finally be received. The manner in which a communication circuit in accordance with the invention can be constructed and the manner in which it operates are explained below with reference to Fig. 2.

An input/output unit 8 and 9 is present, as may be appreciated from Fig. 2, at the input and output respectively of a communication circuit in accordance with the invention. The unit 8 is connected at its signal output, via a subtraction circuit 10 and two shift registers 11 and 12, to a signal input for the circuit 9.

The aforementioned signal output on the unit 8 is also connected via a synchronization detector 13 to a control unit 14 which is so arranged as to control, in addition to the input/output units 8, 9 and the subtraction circuit 10, an in/out latch 15 connected to the shift register 11 and a comparator 16 connected to the shift register 12. A control output on the input/output unit 9 is connected not only to the control unit 14 via a synchronization detector 17, but also to a control input on the input/output unit 8. The arrows 18, 19 and 20 indicate in the stated sequence a seven-bit data bus between the shift register 12 and the comparator 16, an eight-bit data bus between the shift register 11 and the latch 15, and an eight-bit data bus between the input/output latch 15 and the peripheral unit belonging to the communication circuit.

The task of the input/output units 8, 9 is to ensure the matching of the internal signals of the communication circuit and to provide the input and output of signals to and from the communication circuit. The input/output unit may, for example, be so arranged that the external signal is normally maintained at a high value, via a resistance to the supply voltage, whereas it is activated to produce a one by being earthed via a transistor. The task of the control unit 14 is, as its name implies, to control the flow of signals on the communication circuit. The tasks of the other functional blocks indicated will be appreciated from the following functional description.

Let us assume that a binary coded word in the form of a binary signal arrives on the communication circuit via the line 7. The first binary one in the signal will be detected by the synchronization detector 13, in which case the control unit 14 will be activated and will in turn activate the subtraction unit 10, causing it to subtract the value one from the subsequent binary number with seven bits which constitutes the address component of the binary coded word. The synchronization detector 13 will then be de-activated. After a further eight clock cycles the address component, from which the value one has now been subtracted, will be present in the shift register 12, whilst the unaltered information component will still be present in the shift register 11. The control unit will now cause the comparator 16 to compare the contents of the shift register 12, i.e. the address component, with the number zero. If the address component does not have the value zero, the address and information components, which together contain sixteen bits, will now be changed over via the input/output unit 9 to the immediately following communication circuit via the line 7. If the address component is zero, which, in accordance with the foregoing, means that the binary coded word has reached the correct communication circuit, the control unit 14 will activate the input/output latch 15.

If, moreover, the signal at the control input 6 is zero, which means that the communication circuit in question has been programmed as a receiver, the contents of the shift register 11, i.e. the information component of the binary coded word, will be placed in the input/output latch 15 and will be transmitted along the bus 20 to the peripheral unit 3. If the communication programme in question has been programmed as a transmitter, the contents of the input/output latch 15, i.e. the information component received from the bus 20, will be placed in the shift register 11, whereupon the contents of this, on being instructed so to do by the control unit 14, will be switched onto the line 7 via the input/output unit 8.

Finally, it is also possible for a signal to occur on the line 7 of the input/output unit 9. In this case every value one in a signal of this kind will be detected by the synchronization detector 17, which will activate the control unit in such a way that the signal will be transmitted onwards along the line 7 via the input/output unit 8.

## Claims

1. A method for the transfer of information, such as control command signals and measuring data, etc., between a central processing unit (1) and peripheral units (3), whereby the information is transferred in the form of a binary code word with an address component and an information component via a number of communication circuits (2) connected in a loop to the central processing unit (1), said circuits being so activated as to perform the transfer of the information component between the central processing unit (1) and a peripheral unit (3) selected on the basis of the address component, *characterized* in that the address component by means of which the communication circuits (2) are activated is identical for all the communication circuits (2), in that said address component, provided it does not have the value at which activation takes place, will be transmitted onwards between the communication circuits (2) in the chain and in so doing will be modified in such a way that, once the binary coded word has arrived at the communication circuit (2) belonging to the selected peripheral unit (3) or at the central processing unit (1), the address component will have the value at which activation takes place, and in that the address component will, on transmission of the binary coded word, be given a value such that, after said modification has taken place, the address component will exhibit said value at which activation takes place.

2. A method according to Patent Claim 1, *characterized* in that the aforementioned address which triggers the activation of the communications circuits has the value zero, and in that the modification of the address component means that this will be reduced by the value one each time it passes along a communication circuit in the chain.

3. An arrangement for a system for the transfer of information, such as control command signals and measuring data, etc., between a central processing unit (1) and peripheral units (3), whereby a number of communication circuits (2), one for each peripheral unit (3), are connected in a loop to the central processing unit (1), said communication circuits (2) being so arranged as to activate the transfer of information between a selected peripheral unit (3) and the central processing unit (1) when an address intended for the selected unit is detected by the associated communication circuit (2), *characterized* in that all the communication circuits (2) are identical and are so arranged on the one hand as to be activated by an address which is identical for all the communication circuits (2), and on the other hand as to modify an address which has been adapted by the central processing unit (1) so as to relate to the selected peripheral unit (3) with regard to its position in the loop in such a way that the address, once it has passed along the communication circuits which belong to the units situated in the chain ahead of the selected peripheral unit, will have been modified to the aforementioned address for which the communication circuits have been activated.

4. An arrangement according to Patent Claim 1, *characterized* in that the communication circuit (2) is so arranged as to modify an address which has arrived on it by subtracting the value one, and in that the address by means of which the communication circuit (2) is activated has the value zero.

## Patentansprüche

1. Verfahren zur Informationsübertragung, wie Steuerbefehlssignalen und Meßdaten und dgl., zwischen einer zentralen Recheneinheit (1) und Peripheriegeräten (3), wodurch die Information über eine Anzahl von Übertragungskreisen (2), die in einer Schleife mit der zentralen Recheneinheit (1) verbunden sind, in Form eines binären Kodewortes mit einem Adressenbestandteil und einem Informationsbestandteil übertragen wird, wobei die Schaltkreise so aktiviert werden, daß sie die Übertragung des Informationsbestandteils zwischen der zentralen Recheneinheit (1) und einem aufgrund des Adressenbestandteils ausgewählten Peripheriegeräts (3) durchführt, *dadurch gekennzeichnet, daß* der Adressenbestandteil, durch den die Übertragungskreise (2) aktiviert werden, für alle Übertragungskreise (2) identisch ist, *daß* der Adressenbestandteil, vorausgesetzt, er hat nicht den Wert, bei dem die Aktivierung stattfindet, weiter zwischen den Übertragungskreisen (2) in der Kette übertragen wird und dabei derart modifiziert wird, daß, wenn das binäre Kodewort beim dem zu dem gewählten Peripheriegerät (3) gehörenden Übertragungskreis (2) oder bei der zentralen Recheneinheit (1) angekommen ist, der Adressenbestandteil den Wert haben wird, bei dem die Aktivierung stattfindet, *und daß* der Adressenbestandteil bei der Übertragung des binären Kodeworts einen solchen Wert erhalten wird, daß, nachdem die Modifizierung stattgefunden hat, der Adressenbestandteil den Wert zeigen wird, bei dem die Aktivierung stattfindet.

2. Verfahren nach Patentanspruch 1, *dadurch gekennzeichnet, daß* die obengenannte Adresse, die die Aktivierung der Übertragungskreise triggert, den Wert Null hat, *und daß* die Modifizierung des Adressnbestandteils bedeutet, daß dieser jedesmal, wenn er den Übertragungskreis in der Kette durchläuft, um den Wert Eins reduziert wird.

3. Eine Anordnung für ein System zur Übertragung von Informationen, wie Steuerbefehlssignale und Meßdaten und dgl., zwischen einer zentralen Recheneinheit (1) und Peripheriegeräten (2), wodurch eine Anzahl von Übertragunskreisen (3), jeweils einer für jedes Peripheriegerät (3), in einer Schleife mit der zentralen Recheneinheit (1) verbunden sind, wobei die Übertragungskreise so angeordnet sind, daß sie die Informationsübertragung zwischen einem gewählten Peripheriegerät (3) und der zentralen Recheneinheit (1) dann aktivieren, wenn von dem entsprechenden Übertragungskreis eine für das entsprechende Gerät bestimmte Adresse gefunden wird, *dadurch gekennzeichnet, daß* alle Übertragungskreise (2) identisch und so angeordnet sind, daß sie einerseits durch eine für alle Übertragungskreise identische Adresse aktiviert werden und andererseits eine Adresse modifizieren, die von der zentralen Recheneinheit (1) angepaßt wurde, um zu dem gewählten Peripheriegerät (3) bezüglich dessen Position in der Schleife zu gehören, derart, daß die Adresse, wenn sie einmal die zu den Geräten, die in der Kette vor dem gewählten Peripherigerät liegen, gehörenden Übertragungskreise passiert hat, in die obengenannte Adresse modifiziert worden sein wird, für die die Übertragungskreise aktiviert wurden.

4. Anordnung nach Patentanspruch 1 *dadurch gekennzeichnet, daß* der Übertragungskreis (2) so angeordnet ist, daß er eine Adresse, die dort ankommt, durch Abziehen des Wertes Eins modifiziert, *und daß* die Adresse, durch die der Übertragungskreis (1) aktiviert wird, den Wert Null hat.

**Revendications**

1. Méthode de transfert d'informations telles que signaux de contrôle-commande, données de mesure, etc..., entre une unité centrale de traitement (1) et des unités périphériques (3) suivant laquelle l'information est transférée sous forme d'un mot codé binaire avec une composante d'adresse et une composante de données à travers un certain nombre de circuits (2) de communication reliés en boucle jusqu'à l'unité centrale de traitement (1), lesdits circuits étant activés pour opérer le transfert de la composante de données entre l'unité centrale de traitement (1) et une unité périphérique (3) choise sur la base de la composante d'adresse, *caractérisée:* en ce que la composante d'adresse par le moyen de laquel les circuits de communication (2) sont activés, est identique pour tous les circuits de communication (2), en ce que la composante d'adresse, pourvu qu'elle n'ait pas la valeur à laquelle se produit l'activation, sera transmise plus loin entre les circuits (2) de communication de la chaine et, ce faisant, sera modifiée de telle sorte que, une fois que le mot codé binaire sera arrivé aux circuits (2) de communication appartenant à l'unité périphérique choisie (3) ou à l'unité centrale de traitement (1), la composante d'adresse ait la valeur à laquelle se produit l'activation, et en ce qu'il sera donné à la composante d'adresse, sur transmission du mot codé binaire, la valeur, après que la modification ait eu lieu, à laquelle se produit l'activation.

2. Méthode selon la revendication 1, *caractérisée:* en ce que l'adresse susmentionnée qui dé communication a la valeur zéro, et en ce que la modification de la composante d'adresse consiste en ce qu'elle soit réduite de la valeur un chaque fois qu'elle traverscera un circuit de communication de la chaine.

3. Dispositif de transfert d'information, telles que signaux de contrôl-commande, données de mesure, etc..., entre une unité centrale de traitement (1) et des unités périphériques (3), dans lequel un certain nombre de circuits de communication (2), un pour chaque unité périphérique (3) sont reliés en boucle à l'unité centrale de traitement (1) lesdits circuits de communication (2) étant organisé pur rendre actif le transfert de l'information entre une unité périphérique choisie (3) et l'unité centrale de traitement (1) lorsqu'une adresse destinée à l'unité choisie est détectée par le circuit de communication associé (2), *caractérisée:* en ce que tous les circuits de communication (2) sont identiques et sont organisés d'une part pour être activés par une adresse qui est identique pour tous les circuits de communication (2), et d'autre part pour modifier une adresse qui a été adaptée par l'unité centrale de traitement (1) pour mettre en relation l'unité périphérique choisie (3) en fonction de sa position dans la boucle de telle sorte que l'adresse, une fois qu'elle a traversé les circuits de communication qui appartiennent aux unités situées dans la chaîne en amont de l'unité périphérique choisie, soit modifiée en l'adresse susmentionnée pour laquelle les circuits de communication ont été activés.

4. Dispositif selon la revendication 1, *caractérisée:* en ce que chaque circuit de communication (2) est organisé pour modifier, par soustraction de la valeur un, l'adresse qui est parvenue jusqu'à lui, et en ce que l'adresse par laquelle le circuit de communication (2) est rendu actif, possède la valeur zéro.

## FIG 1

EP 0 248 805 B1

# FIG 2

EP 0 248 805 B1